# EUROPÄISCHE PATENTSCHRIFT

(11) **EP 3 573 877 B1**
(45) Veröffentlichungstag und Bekanntmachung des Hinweises auf die Patenterteilung: **12.07.2023**
(21) Anmeldenummer: 18702402.1
(22) Anmeldetag: 25.01.2018
(51) Int. Cl.: B62D 7/04, B62D 7/15, B62D 11/04

(54) **FAHRWERK**
RUNNING GEAR
CHÂSSIS

(30) Priorität: 28.01.2017 AT 600092017
(43) Veröffentlichungstag der Anmeldung: 04.12.2019
(73) Patentinhaber: Agilox Systems GmbH, 4671 Neukirchen bei Lambach (AT)
(72) Erfinder: SCHWAIGER, Meinhard, 4040 Linz (AT)
(74) Vertreter: Babeluk, Michael
(86) Internationale Anmeldenummer: PCT/AT2018/060024
(87) Internationale Veröffentlichungsnummer: WO 2018/136987

(56) Entgegenhaltungen:
- WO-A1-2011/131525
- DE-A1-102013 019 726
- DE-U1-202014 000 755

## Beschreibung

Die Erfindung betrifft ein Fahrwerk für Transportvorrichtungen gemäß dem Oberbegriff von Patentanspruch 1.

Insbesondere betrifft diese Erfindung ein Antriebssystem für hochagile und präzise steuerbare Transporteinrichtungen zum automatisierten Befördern, Aufnehmen und Abgeben von Transportgütern, Transportbehältnissen bzw. Paletten, sowie für hochagile Plattformen, die mit automatisierten Handhabungseinrichtungen (z.B. Greif-, Abstütz-, Halte- und Spannvorrichtungen), automatisierten Arbeitsgeräten (z.B. für Niet-, Schraub-, Schweiß-, Lackier-, Schleif- oder Polierarbeiten), komplexen Robotersystemen (z. B. Knickarmroboter) oder anderen Einrichtungen zur Erfüllung von Aufgaben in besonders gefährdeten oder unzugänglichen Bereichen (z.B. ferngesteuerte Detektion, Bergung oder Entschärfung von potentiell gefährlichen Gegenständen) mit im Fahrgestell integrierten lenkbaren Radeinheiten.

Aus der GB 820 228 A ist ein Stapelfahrzeug mit einem U-förmigen Fahrgestell bekannt, wobei jeder Schenkel des Fahrgestelles eine Radeinheit mit lenkbaren Rädern aufweist. Die Radeinheiten sind über eine Lenkvorrichtung zentral betätigbar.

Die AT 409 369 B offenbart eine Einrichtung zum Transport von Gütern mittels eines Portalhebezeugs, welches mit einer Allradlenkung versehen ist, wobei die in Führungen verfahrbaren Räder um 90° geschwenkt werden können.

Die DE 33 24 862 A1 beschreibt einen Lenkmechanismus für ein Fahrzeug mit Allradlenkung mit einem die Räder miteinander verbindenden Hebelgestänge.

Autonom agierende fahrerlose Transportsysteme sind aus den Druckschriften EP 2 062 837 A1, WO 2005/118436 A1, DE 33 28 241 A1, DE 24 35 494 A1, DE 10 2007 046 868 A1, DE 10 2013 017 062, EP 2 336 075 B1 bekannt.

Die US 5,623,818 A zeigt ein vierrädriges Fahrzeug, dessen Radeinheiten einzeln, z.B. über hydraulische Motoren, angetrieben werden. Je zwei Radeinheiten sind mechanisch gekoppelt, so dass eine Rotation des Fahrzeuges am Stand ermöglicht wird.

Die GB 2 042 217 A offenbart ein selbstfahrendes Transportfahrzeug mit einem lenkbaren Antriebsrad und zwei Stützrädern, deren Drehbewegung über Sensoren erfasst wird.

Die WO 2012/096570 offenbart ein mobiles Fahrzeug bzw. eine Transfereinrichtung mit Antriebsrädern, deren Drehachsen parallel in einer Ebene im Wesentlichen parallel zum Untergrund ausgerichtet sind und die jeweils um eine zweite Achse senkrecht zur Ebene mittels einer zweiten unabhängigen Antriebseinheit in die gewünschte Fahrtrichtung ausgerichtet werden.

Aus der DE 42 34 174 A1 ist ein fahrerloses Flurförderfahrzeug mit Licht- oder Ultraschallsensoren bekannt, wobei eine Fahrkorrektur durchgeführt wird, wenn die Sensoren eine Fehlstellung anzeigen.

Die DE 10 2007 046 868 und die DE 10 2013 017 062 zeigen ein Antriebssystem für ein automatisiertes Transportsystem für Paletten bestehend aus zwei Radeinheiten mit jeweils zwei unabhängig voneinander angetriebenen Rädern, sodass diese über die Regelung der Umfangsgeschwindigkeit die Fahrtrichtung der Antriebseinheit bestimmen und das Transportsystem beliebige Kurvenfahrten ausführen kann; die Antriebseinheit ist vertikal mittig drehbar gelagert mit gegenüber der Fahrbahnebene starr ausgeführten Antriebsachsen, sodass diese Bodenunebenheiten nicht ausgleichen kann und es bei hoher Geschwindigkeit zu unkontrollierten Seitenbewegungen kommen kann.

Des Weiteren ist aus der EP 2 336 075 B1 ein Antriebssystem für eine fahrerlose Transporteinrichtung bekannt, die mit lenkbaren Radeinheiten ausgeführt ist, die aus jeweils zwei individuell angetriebenen Rädern besteht, drehbar um eine Vertikalachse gelagert ist und deren Richtungs- und Geschwindigkeitsbeeinflussung über eine Drehzahlregelung der Antriebsräder erfolgt.

Die DE 10 2013 019 726 A1, welche die Merkmale des Oberbegriffs des unabhängigen Anspruchs zeigt, beschreibt ein Fahrwerk, das über eine Schwenkachse quer zur Radachse schwenkbar ist. Dazu sind die Räder über die Schwenkachse zwischen der Radachse und der Transporteinrichtung an zwei Balken aufgehängt. Damit können Unebenheiten und kleinere Hindernisse, die einem der Räder im Weg liegen, ausgeglichen und eine stabilere Fahrt ermöglicht werden. Nachteilig ist jedoch, dass diese Schwenkachse bei großen Lasten der Transporteinrichtung stark belastet wird. Darüber hinaus wirken so auch starke Seitenkräfte und Kippmomente auf die Räder selbst. Dies führt zu einer nur eingeschränkten Belastbarkeit und einer verminderten Lebensdauer der Bauteile. Insbesondere nachteilig ist, dass die Schwenkachse deutlich oberhalb der Ebene des Drehlagers angeordnet ist, indem die Schwenklager an sich nach oben erstreckenden Tragteilen angebracht sind. Dadurch ergeben sich nicht nur erhöhte Belastungen des Drehlagers beispielsweise bei der Kurvenfahrt, es ist auch durch die Pendelbewegung ein großer Freiraum innerhalb des Drehlagers notwendig, da die Räder dann relativ weit seitlich ausschwenken. Dies verhindert eine kompakte Bauweise.

Die WO 2011/131525 A zeigt ein Fahrwerk mit pendelnd aufgehängten Rädern. Die Drehbewegung wird oberhalb der Räder über ein stilförmiges Anbindungselement ermöglicht. Eine solche Lösung ist für schwere Lasten und höhere Geschwindigkeiten nicht geeignet.

Insbesondere beim automatischen Aufnehmen von Transportgütern oder Paletten, beim Andocken an fixe Übergabestationen oder bei der Durchführung von präzisen Arbeiten mittels automatisierter Handhabungs- bzw. Arbeitsgeräte auf der Transportvorrichtung ergibt sich die Problematik, dass die Transporteinrichtung und die Palette bzw. die Übergabestation genau fluchtend zueinander ausgerichtet sein müssen, bzw. das Handhabungs- oder Arbeitsgerät exakt auf bestimmte Positionen ausgerichtet sein muss und auch der Verfahrweg exakt einem definierten Bewegungspfad ohne Reversieren folgt. Dies erfordert ein besonders exakt arbeitendes Antriebs- und Positioniersystem und setzt voraus, dass bei derartigen Antriebssystemen mit lenkbaren Radeinheiten, immer beide Antriebsräder einer Radeinheit zuverlässigen Bodenkontakt haben. Bisher bekannte lenkbare Radeinheiten mit zwei unabhängig angetriebenen Rädern haben eine mittig angeordnete Dreh-/Schwenk-Lagerung. Diese Ausführungsform weist den Nachteil auf, dass nur kleine Querkräfte aufgenommen werden können und die bei Kurvenfahrten entstehenden Querkräfte gering gehalten werden müssen, durch Verringerung der Fahrtgeschwindigkeit in der Kurve bzw. Kurvenfahrten gänzlich durch geradlinige Fahrtabschnitte in Vorwärts-/Rückwärtsbewegung, Querbewegung 45°-Schrägfahrt und Drehbewegung der Transportvorrichtung nur im Stillstand ersetzt werden. Dieser Nachteil bewirkt eine Verlangsamung der Transportvorgänge bzw. verhindert den Einsatz für bestimmte Anwendungen, die eine exakte Fahrtbewegung entlang definierter Bahnkurven erfordern.

Aufgabe der Erfindung ist es, ein Antriebssystem mit lenkbaren Radeinheiten zu definieren, das eine exakte Positionierung des Transportsystems und eine gleichmäßig hohe Geschwindigkeit auch bei beliebigen Kurvenfahrten auf unebenem Untergrund erlaubt und hohe Querkräfte zuverlässig aufnehmen kann.

Erfindungsgemäß wird dies durch die Merkmale von Patentanspruch 1 erreicht.

Genannte Richtungs- und Ortsangaben wie senkrecht oder waagrecht beziehen sich dabei, falls nicht anders angegeben, auf Fahrwerke, welche sich in bestimmungsgemäßer Gebrauchsstellung auf einer ebenen Fahrbahn befinden, sprich die Räder an der Unterseite angeordnet sind.

Dadurch wird erreicht, dass die Radeinheiten sowohl in vertikaler Richtung als auch in horizontaler Richtung in Fahrtrichtung und quer zur Fahrtrichtung gegenüber der Transportvorrichtung abgestützt sind und die lenkbare Radeinheit zum Ausgleich von Bodenunebenheiten senkrecht zur jeweiligen Fahrtrichtung schwenkbar ist, sodass immer beide Räder einer Radeinheit auch bei Bodenunebenheit mit dem Boden in Kontakt sind.

Weiters ist vorteilhaft, wenn die beiden Räder unabhängig voneinander antreibbar sind. Dadurch kann durch unterschiedliche Ansteuerung der Räder eine Drehbewegung induziert werden, während bei gleicher Ansteuerung eine geradlinige Bewegung möglich ist.

Es kann vorgesehen sein, dass im Radträger zwei Antriebsmotoren vorgesehen sind, die jeweils mit einem Rad vorzugsweise über ein Getriebe verbunden sind. Dadurch können auf einfache Art unterschiedliche Bewegungsrichtungen verfolgt werden.

Besonders wenn das Drehlager als Wälzlager ausgebildet ist, so kann auf kostengünstige Art eine leichtgängig drehbare Verbindung hergestellt werden.

Weiters ist erfindungsgemäß vorgesehen, dass die Schwenkachse sowohl senkrecht auf die Hauptdrehachse als auch auf die gemeinsame Drehachse der Räder angeordnet ist. Dadurch wird eine optimale Beweglichkeit in alle Richtungen erreicht.

Es ist vorteilhaft, wenn die zur Fahrtrichtung bestimmende Ausrichtung der Räder über das Drehlager erfolgt, deren Hauptdrehachse im Wesentlichen senkrecht zur Fahrbahnebene ausgerichtet ist und der Niveauausgleichswinkel bis zu +/- 15° beträgt, vorzugsweise +/- 5°. Dadurch können Hindernisse oder Unebenheiten auf dem befahrenden Untergrund durch das Fahrwerk ausgeglichen werden. Weiters ist erfindungsgemäß vorgesehen, dass die Schwenkachse und die Drehachse in einer gemeinsamen Ebene liegen, die im Gebrauchszustand parallel zur Fahrbahnebene verläuft. Dabei wird von einer im Wesentlichen ebenen Fahrbahnebene ausgegangen.

In einer bevorzugten Ausführungsform weist der Führungsring eine das Drehlager aufnehmende zylindrische Bohrung und die äußere Geometrie eine beliebige geometrische Form, z.B. quaderförmig, auf. Dadurch wird sichergestellt, dass sich der Innenring gut im Führungsring bewegen kann, während die äußere Geometrie des Führungsrings an angrenzende Teile wie Koppelvorrichtungen angepasst werden kann.

Um Transportgüter noch besser transportieren zu können ist es vorteilhaft, wenn die Transportvorrichtung mit mehreren Fahrwerken der beschriebenen Art, vorzugsweise mit vier Fahrwerken und im Falle von sehr großen Transportvorrichtungen für die Aufnahme von besonders sperrigen oder schweren Transportgütern wie z.B. Flugzeugkomponenten (Rumpfteile, Flügelteile), Großmaschinenbaukomponenten für Großturbinen, Straßen- bzw. Eisenbahnwaggons oder Lokomotiven, mit mehr als vier Fahrwerken, verwendet werden. Besonders vorzugsweise ist vorgesehen, dass die gemeinsamen Drehachsen der Fahrwerke relativ zueinander ausrichtbar sind. Dadurch können die Bewegungsrichtungen aufeinander abgestimmt werden, um damit die Bewegungsrichtung, Bewegungsgeschwindigkeit und dergleichen der Transportvorrichtung frei wählen und optimieren zu können. Es können durch definierte Veränderung der Drehzahlen und Drehrichtungen der Räder die gemeinsamen Drehachsen relativ zueinander und relativ zur Transportvorrichtung ausgerichtet werden und eine nahezu uneingeschränkte Manövrierbarkeit ermöglicht werden, sodass geradeaus oder in jeder beliebigen Bahnkurve vorwärts, rückwärts oder seitlich und am Stand drehend verfahren werden kann.

Weiters ist vorteilhaft, wenn bei Geradeausfahrt in eine Hauptbewegungsrichtung die Fahrtrichtungen der Fahrwerke der Transportvorrichtung parallel ausgerichtet sind. Dadurch wird eine geradlinige Bewegung möglich.

Weiters kann vorteilhaft sein, wenn für eine Kurvenfahrt in beliebiger Richtung und Fahrtgeschwindigkeit die aktuellen Fahrtrichtungen der Fahrwerke auf einen von der Trajektorie der gewünschten Bewegungsbahn abgeleiteten Fluchtpunkt im Abstand vom Bewegungsmittelpunkt der Transportvorrichtung mittels der Drehachsen durch Steuerung der Drehgeschwindigkeiten der Räder ausgerichtet sind und die Kurvenbahngeschwindigkeit der Transportvorrichtung mittels Steuerung der einzelnen Drehgeschwindigkeiten der Räder gesteuert wird.

Es kann auch sinnvoll sein, wenn für eine Drehung am Stand um die Achse mit der Drehgeschwindigkeit die Fahrwerke auf den Fluchtpunkt im Abstand vom Drehmittelpunkt der Transportvorrichtung mittels der Drehachsen durch Steuerung der Drehgeschwindigkeiten der Räder ausgerichtet sind und die Drehgeschwindigkeit der Transportvorrichtung mittels Steuerung der einzelnen Drehgeschwindigkeiten der Räder gesteuert wird.

Weiters ist vorzugsweise vorgesehen, dass für die Navigation und für den sicheren Betrieb Laserscanner vorgesehen sind, vorzugsweise zwei Laserscanner, deren rotierende Laserstrahlen überlappend kreisförmige Flächenanteile überstreichen, und derart eine 360° Rundumsicht in der Ebene ermöglichen. Diese Laserscanner sind vorzugsweise an zwei gegenüberliegenden Ecken der Transportvorrichtung angeordnet. Die Laserscanner können so Hindernisse und andere Objekte in der Umgebung erkennen und der Bewegungsweg kann sinnvoll geplant und optimiert werden.

Wenn die Energieversorgung elektrisch ausgeführt ist und zumindest ein Energiespeicher zur Energieversorgung in der Transportvorrichtung angeordnet ist, wobei der Ladevorgang der Energiespeicher berührungsfrei oder mittels Kontakten erfolgt, so kann sich die Transportvorrichtung im Wesentlichen kabellos bewegen und muss nur bei niedrigem Energiestand aufgeladen werden.

Bei besonders vorteilhaften Ausführungen ist vorgesehen, dass diese mit Einrichtungen zum automatisierten Befördern, Aufnehmen und Abgeben von Transportgütern, Transportbehältnissen oder Paletten ausgerüstet ist. Dadurch wird der Anwendungsbereich der Transportvorrichtung erweitert.

Weiters kann vorgesehen sein, dass diese mit Zusatzeinrichtungen als automatisierte Handhabungseinrichtungen, wie z.B. Greif-, Abstütz-, Halte- und Spannvorrichtungen, oder als automatisierte Arbeitsgeräte, wie z.B. Niet-, Schraub-, Schweiß-, Lackier-, Schleif- oder Poliervorrichtungen, oder als komplexe Robotersysteme, wie z. B. Knickarmroboter oder Snake-Arm, oder als Kamerasysteme oder anderen Einrichtungen zur Erfüllung von Aufgaben in besonders gefährdeten oder unzugänglichen Bereichen, wie z.B. ferngesteuerte Detektoren, Vorrichtungen zur Bergung oder Entschärfung von potentiell gefährlichen Gegenständen, ausgestattet ist und die Bewegung der Transportvorrichtung mittels der Räder mit der Bewegung der Zusatzeinrichtungen koordiniert gesteuert wird. Damit kann ein im Wesentlichen automatisches oder halbautomatisches Beladen und Transportieren ermöglich werden.

Die Erfindung wird im Folgenden anhand der nicht einschränkenden Figuren näher erläutert. Es zeigen:

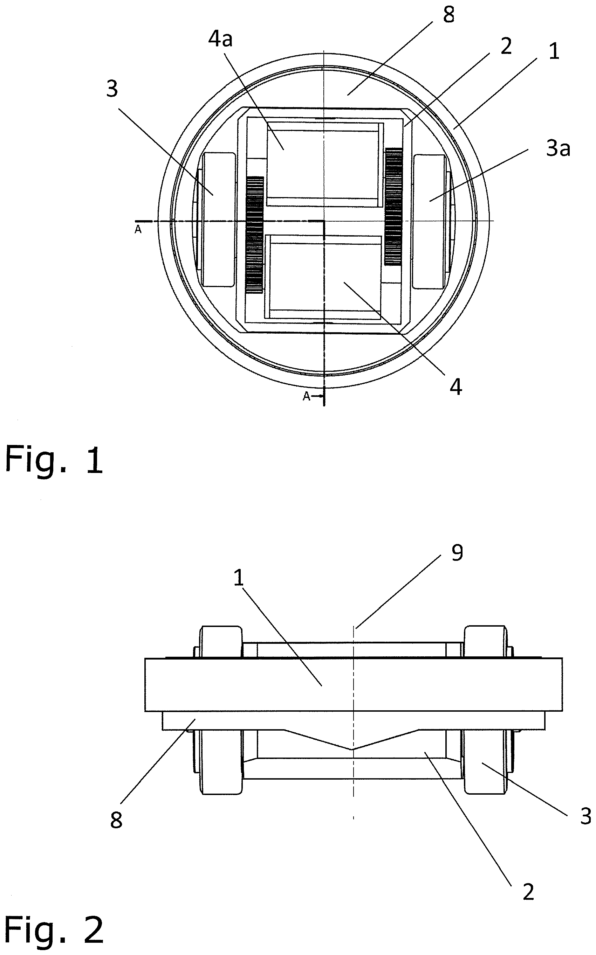

- Fig. 1: ein erfindungsgemäßes Fahrwerk (Radeinheit) in Draufsicht;
- Fig. 2: die Radeinheit in einer Ansicht in Fahrtrichtung;

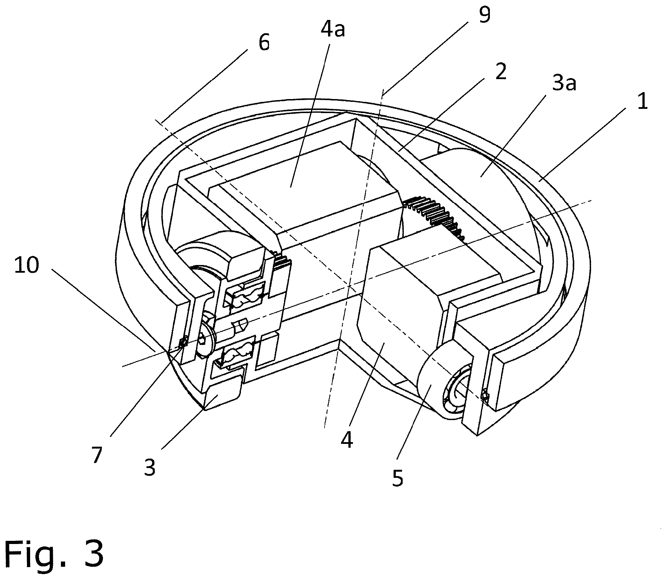

- Fig. 3: die Radeinheit in Schrägansicht von oben und im Schnitt entlang der Schnittlinie A-A von Fig. 1;

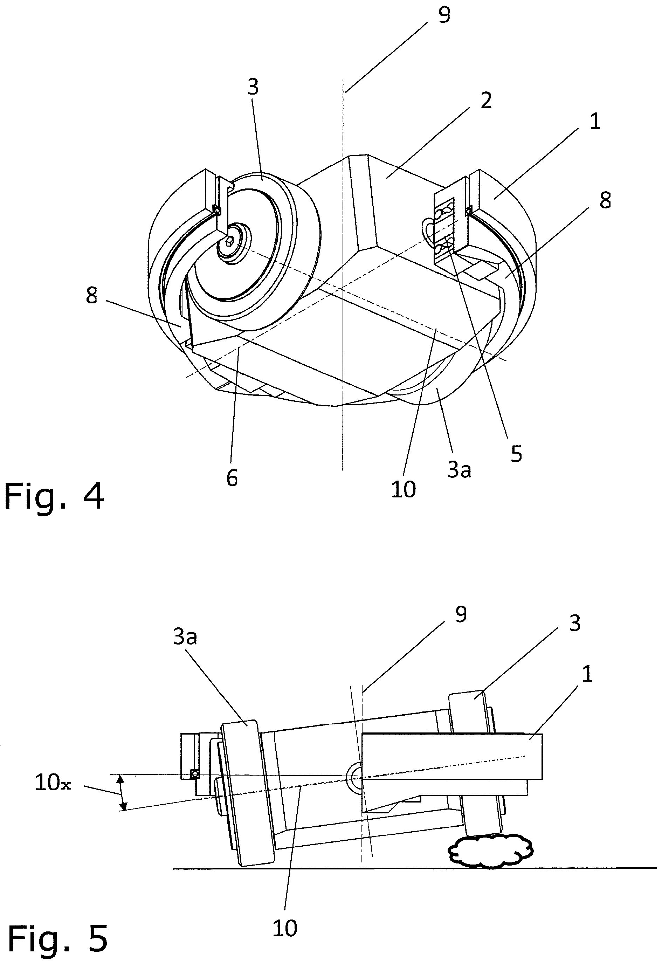

- Fig. 4: die Radeinheit in Schrägansicht von unten mit aufgeschnittener Dreh- und Kipplagerung;
- Fig. 5: die Radeinheit in Einbaulage in Fahrtrichtung mit Schrägstellung der Antriebsräder infolge Bodenunebenheit mit aufgeschnittener Dreh- und Kipplagerung;
- Fig. 6: eine Transportvorrichtung in einer schematischen Ansicht mit vier parallel ausgerichteten Antriebssystemen in Geradeausfahrt;
- Fig. 7: die Transportvorrichtung mit vier für eine Drehung am Stand ausgerichteten Antriebssystemen in einer schematischen Ansicht von unten;
- Fig. 8: die Transportvorrichtung mit vier für eine Kurvenfahrt ausgerichteten Antriebssystemen in einer schematischen Ansicht von unten;
- Fig. 9: die Transportvorrichtung mit vier Antriebseinheiten in Schrägansicht von unten mit zusätzlichen Navigations-/Sicherheitssensoren;
- Fig. 10: die Transportvorrichtung mit vier Antriebseinheiten in Ansicht von unten mit zusätzlichen Navigations-/Sicherheitssensoren und deren Erfassungsbereichen.

Das erfindungsgemäße Antriebssystem besteht aus einem Führungsring 1, einem Radträger 2 für die beiden getrennt angetriebenen Antriebsräder 3 und 3a, mit der gemeinsamen Drehachse 10, den Antriebsmotoren 4 und 4a und der Schwenklagerung 5, das die Schwenkachse 6 bildet, dem Drehlager 7, das die Hauptdrehachse 9 bildet, und dem Innenring 8.

Die Vertikalkräfte werden vom Führungsring 1 über das Drehlager 7 auf den Dreh/Schwenkring, nämlich den Innenring 8, die Schwenklagerung 5 und weiter auf den Radträger 2 und auf die Antriebsräder 3 und 3a übertagen, wobei sich die Antriebsräder ungehindert um die Hauptdrehachse 9 in jede beliebige Fahrtrichtung ausrichten können und um die Schwenkachse 6 ungehindert zum Ausgleich von Bodenunebenheiten ausrichten können. Horizontalkräfte, die sich aus der Vorwärtsbewegung der Transportvorrichtung 11 und den Querkräften bei Kurvenfahrten ergeben, werden vom Innenring 8, dem Drehlager 7 und dem Führungsring 1 aufgenommen.

Durch definierte individuelle Steuerung der Drehzahlen der Antriebsräder 3 und 3a werden die einzelnen Antriebseinheiten in Bezug auf deren Hauptdrehachse 9 ausgerichtet, sodass eine damit ausgeführte Transportvorrichtung 11 nahezu uneingeschränkt, d.h. vorwärts, rückwärts, seitlich, in jeder beliebigen Bahnkurve und am Stand drehend, in der Ebene manövriert werden kann.

Für die Navigation und für den sicheren autonomen Betrieb sind Laserscanner 14 und 14a vorgesehen, die eine 360° Rundumsicht in der Ebene ermöglichen.

Die Energieversorgung erfolgt vorzugsweise elektrisch, wobei zur Speicherung der elektrischen Energie dem Stand der Technik entsprechende Akkumulatoren Verwendung finden, die gleichzeitig im Belastungsbetrieb auch aufgeladen werden können. Der Ladevorgang erfolgt berührungsfrei oder mittels Kontakten.

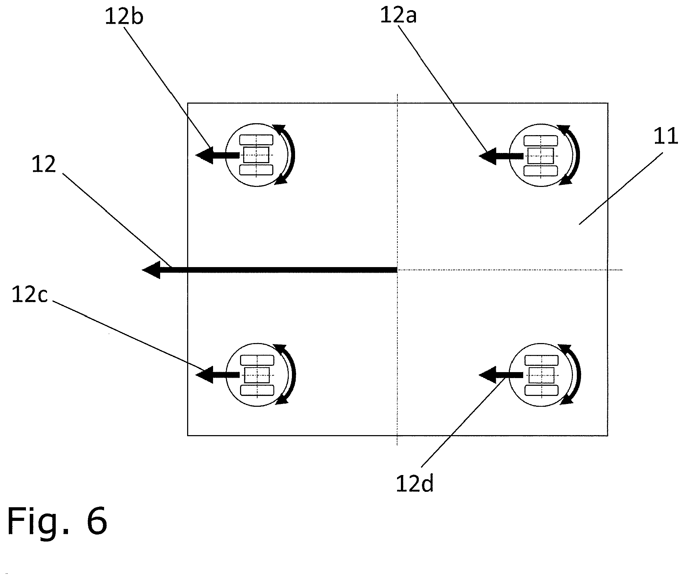

Fig. 6, Fig. 7 und Fig. 8 stellen verschiedene Bewegungsmuster einer Transportvorrichtung 11 mit vier an den Ecken der Transportvorrichtung 11 angeordneten Fahrwerken dar. Dabei zeigt Fig. 6 eine im Wesentlichen geradlinige Bewegung, bei der alle Fahrwerke parallele Drehachsen 10a, 10b, 10c, 10d ihrer Räder 3, 3a aufweisen. Dadurch sind auch alle ihre Fahrtrichtungen 12a, 12b, 12c, 12d parallel und zeigen in die gleiche Richtung. Daraus ergibt sich eine lineare Hauptbewegungsrichtung 12 für die Transportvorrichtung 11.

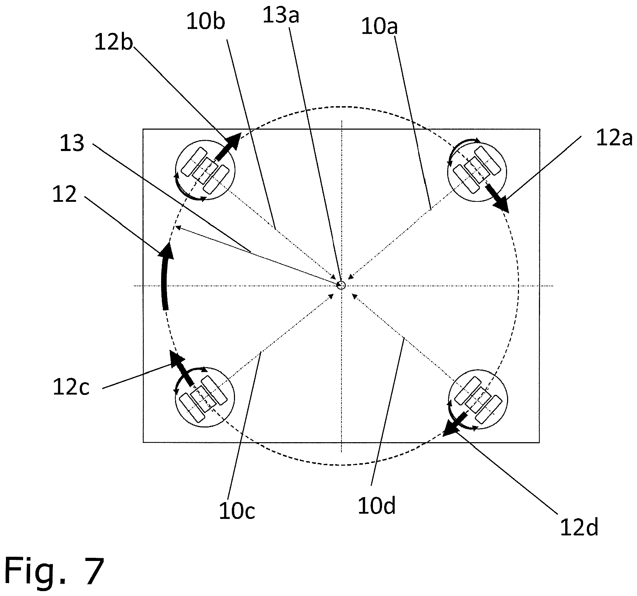

Bei der in Fig. 7 gezeigten Drehbewegung treffen sich alle Drehachsen 10a, 10b, 10c, 10d in einem Fluchtpunkt 13a, der damit die Drehachse darstellt. Der Fluchtpunkt 13a ist im Wesentlichen mittig der Transportvorrichtung 11 angeordnet, wodurch sich durch die tangential zu einem Bewegungskreis stehenden Fahrtrichtungen 12a, 12b, 12c, 12d zu einer kreisförmigen Hauptbewegungsrichtung 12 führen. Dadurch dreht sich die Transportvorrichtung 11 um sich selbst.

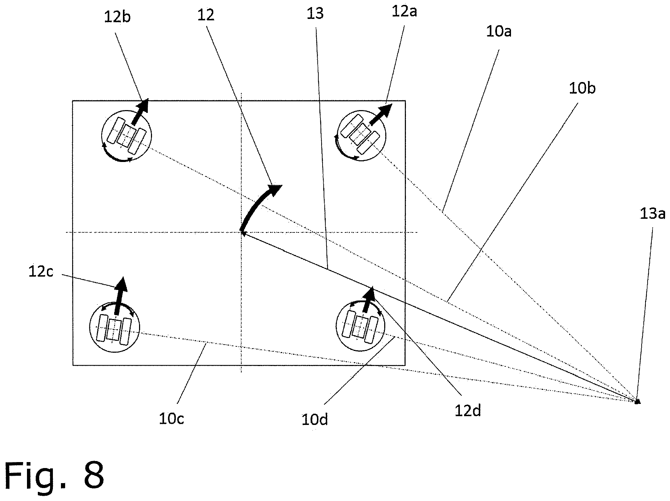

In Fig. 8 ist der Fluchtpunkt 13a außerhalb der Transportvorrichtung 11 angeordnet, weswegen die Fahrtrichtungen 12a, 12b, 12c, 12d jeweils unterschiedliche Richtungen aufweisen. Dabei sind die Fahrwerke auf den von der Trajektorie der gewünschten Bewegungsbahn abgeleiteten Fluchtpunkt 13a im Abstand 13 vom Bewegungsmittelpunkt der Transportvorrichtung 11 mittels der Drehachsen 10a bis 10d durch Steuerung der Drehgeschwindigkeiten der Räder 3, 3a ausgerichtet und die Kurvenbahngeschwindigkeit der Transportvorrichtung 11 wird mittels Steuerung der einzelnen Drehgeschwindigkeiten der Räder gesteuert.

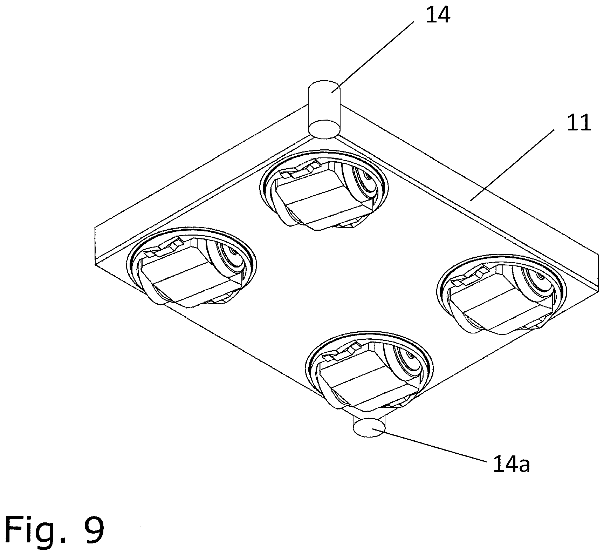

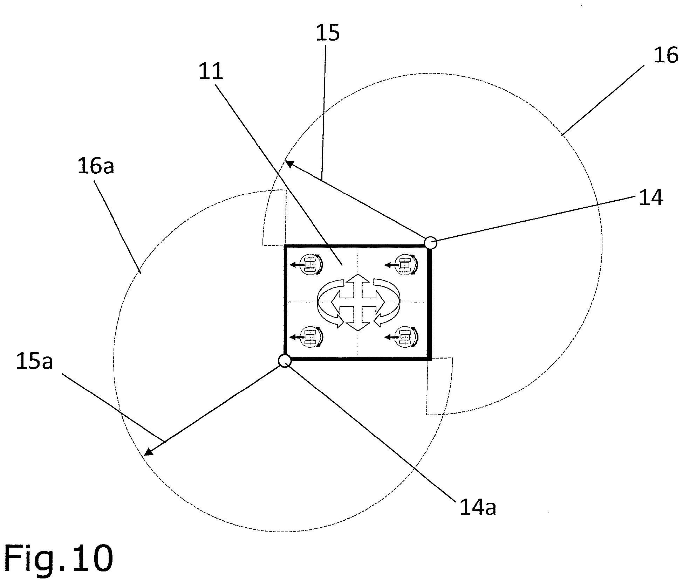

In Fig. 9 und Fig. 10 sind an zwei gegenüberliegenden Ecken der Transportvorrichtung 11 Laserscanner 14, 14a angeordnet, welche durch abtastende Laserstrahlen 15, 15a je ca. einen Dreiviertelkreis als Flächenanteile 16, 16a der Umgebung abtasten können. Durch diese Anordnung kann die direkte Umgebung der Transportvorrichtung 11 auf allen Seiten gescannt werden. Dies wird durch Überschneidungsflächen garantiert.

## Patentansprüche

1. Fahrwerk für Transportvorrichtungen (11) mit einem Führungsring (1) und mit einem im Führungsring (1) um eine im Wesentlichen senkrechte Hauptdrehachse (9) schwenkbaren Radträger (2), an dem zwei um eine gemeinsame Drehachse (10) drehbare Räder (3, 3a) angeordnet sind, wobei im Führungsring (1) über ein Drehlager (7) ein Innenring (8) um die Hauptdrehachse (9) schwenkbar gelagert ist und dass der Radträger (2) über mindestens ein Schwenklager (5) um eine zur Hauptdrehachse (9) im Wesentlichen senkrecht angeordnete Schwenkachse (6) schwenkbar gelagert ist, **dadurch gekennzeichnet, dass** die Schwenkachse (6) sowohl senkrecht auf der Hauptdrehachse (9) als auch auf der gemeinsame Drehachse (10) der Räder (3, 3a) angeordnet ist, wobei das Schwenklager (5) am Innenring angebracht ist und dass die Schwenkachse (6) und die Drehachse (10) in einer gemeinsamen Ebene liegen, die im Gebrauchszustand parallel zur Fahrbahnebene verläuft.

2. Fahrwerk nach Anspruch 1, **dadurch gekennzeichnet, dass** die beiden Räder (3, 3a) unabhängig voneinander antreibbar sind.

3. Fahrwerk nach Anspruch 2, **dadurch gekennzeichnet, dass** im Radträger (2) zwei Antriebsmotoren (4, 4a) vorgesehen sind, die jeweils mit einem Rad (3, 3a), vorzugsweise über ein Getriebe, verbunden sind.

4. Fahrwerk nach einem der Ansprüche 1 bis 3, **dadurch gekennzeichnet, dass** das Drehlager (7) als Wälzlager ausgebildet ist.

5. Fahrwerk nach einem der Ansprüche 1 bis 4, **dadurch gekennzeichnet, dass** die zur Fahrtrichtung bestimmende Ausrichtung der Räder (3, 3a) über das Drehlager (7) erfolgt, wobei die Hauptdrehachse (9) der Räder (3, 3a) im Wesentlichen senkrecht zur Fahrbahnebene ausgerichtet ist und ein Niveauausgleichswinkel (10x) bis zu +/- 15° beträgt, vorzugsweise +/- 5°.

6. Fahrwerk nach einem der Ansprüche 1 bis 5, **dadurch gekennzeichnet, dass** der Führungsring (1) eine das Drehlager (7) aufnehmende zylindrische Bohrung aufweist und die äußere Geometrie eine beliebige geometrische Form, z.B. quaderförmig, aufweisen kann.

7. Transportvorrichtung (11) mit mehreren Fahrwerken, vorzugsweise mit drei oder vier Fahrwerken und für spezielle Ausführungsformen mit mehr als vier Fahrwerken, nach einem der Ansprüche 1 bis 6, **dadurch gekennzeichnet, dass** die gemeinsamen Drehachsen (10a bis 10d) relativ zueinander ausrichtbar sind.

8. Transportvorrichtung (11) nach Anspruch 7, **dadurch gekennzeichnet, dass** bei Geradeausfahrt in eine Hauptbewegungsrichtung (12) die Fahrtrichtungen (12a bis 12d) der Fahrwerke parallel ausgerichtet sind.

9. Transportvorrichtung (11) nach einem der Ansprüche 7 oder 8, **dadurch gekennzeichnet, dass** die Energieversorgung elektrisch ausgeführt ist und zumindest ein Energiespeicher zur Energieversorgung in der Transportvorrichtung (11) angeordnet ist, wobei der Ladevorgang der Energiespeicher berührungsfrei oder mittels Kontakten erfolgt.

10. Transportvorrichtung (11) nach einem der Ansprüche 7 bis 9, **dadurch gekennzeichnet, dass** die Transportvorrichtung (11) mit Einrichtungen zum automatisierten Befördern, Aufnehmen und Abgeben von Transportgütern, Transportbehältnissen oder Paletten ausgerüstet ist.

11. Transportvorrichtung (11) nach einem der Ansprüche 7 bis 10, **dadurch gekennzeichnet, dass** diese mit Zusatzeinrichtungen als automatisierte Handhabungseinrichtungen, wie z.B. Greif-, Abstütz-, Halte- und Spannvorrichtungen, oder als automatisierte Arbeitsgeräte, wie z.B. Niet-, Schraub-, Schweiß-, Lackier-, Schleif- oder Poliervorrichtungen, oder als komplexe Robotersysteme, wie z.B. Knickarmroboter oder Snake-Arm, oder als Kamerasysteme oder anderen Einrichtungen zur Erfüllung von Aufgaben in besonders gefährdeten oder unzugänglichen Bereichen, wie z.B. ferngesteuerte Detektoren, Vorrichtungen zur Bergung oder Entschärfung von potentiell gefährlichen Gegenständen, ausgestattet ist und die Bewegung der Transportvorrichtung (11) mittels der Räder (3, 3a) mit der Bewegung der Zusatzeinrichtungen koordiniert gesteuert wird.

12. Verfahren zum Betreiben einer Transportvorrichtung (11), **dadurch gekennzeichnet, dass** bei einer Transportvorrichtung (11) nach einem der Ansprüche 7 bis 11 für eine Kurvenfahrt in beliebiger Hauptbewegungsrichtung (12) und Fahrtgeschwindigkeit die aktuellen Fahrtrichtungen (12a bis 12d) der Fahrwerke auf einen von der Trajektorie der gewünschten Bewegungsbahn abgeleiteten Fluchtpunkt (13a) im Abstand (13) vom Bewegungsmittelpunkt der Transportvorrichtung (11) mittels der Drehachsen (10a bis 10d) durch Steuerung der Drehgeschwindigkeiten der Räder (3, 3a) ausgerichtet sind und die Kurvenbahngeschwindigkeit der Transportvorrichtung (11) mittels Steuerung der einzelnen Drehgeschwindigkeiten der Räder gesteuert wird.

13. Verfahren nach Anspruch 12, **dadurch gekennzeichnet, dass** für eine Drehung am Stand um den Fluchtpunkt (13a) mit einer Drehgeschwindigkeit die Fahrwerke auf den Fluchtpunkt (13a) im Abstand (13) vom Drehmittelpunkt der Transportvorrichtung (11) mittels der Drehachsen (10a bis 10d) durch Steuerung der Drehgeschwindigkeiten der Räder (3, 3a) ausgerichtet sind und die Drehgeschwindigkeit der Transportvorrichtung (11) mittels Steuerung der einzelnen Drehgeschwindigkeiten der Räder gesteuert wird.

14. Verfahren nach Anspruch 12 oder 13, **dadurch gekennzeichnet, dass** für die Navigation und für den sicheren Betrieb Laserscanner vorgesehen sind, vorzugsweise zwei Laserscanner (14, 14a), deren rotierende Laserstrahlen (15, 15b) überlappend kreisförmige Flächenanteile (16, 16a) überstreichen, und derart eine 360° Rundumsicht in der Ebene ermöglichen.

## Claims

1. Running gear for transport devices (11) having a guide ring (1) and having a wheel carrier (2) which can be pivoted in the guide ring (1) about a substantially vertical main axis of rotation (9) and on which two wheels (3, 3a) which can be rotated about a common axis of rotation (10) are arranged, wherein an inner ring (8) is pivotably mounted in the guide ring (1) about the main axis of rotation (9) via a rotary bearing (7), and that the wheel carrier (2) is pivotably mounted about a pivot axis (6) arranged substantially perpendicularly to the main axis of rotation (9) via at least one pivot bearing (5), **characterised in that** the pivot axis (6) is arranged both perpendicularly to the main axis of rotation (9) and to the common axis of rotation (10) of the wheels (3, 3a), wherein the pivot bearing (5) is mounted on the inner ring and that the pivot axis (6) and the axis of rotation (10) lie in a common plane which, in the state of use, is parallel to the road surface plane.

2. Running gear according to claim 1, **characterised in that** the two wheels (3, 3a) can be driven independently of one another.

3. Running gear according to claim 2, **characterised in that** two drive motors (4, 4a) are provided in the wheel carrier (2), which are each connected to a wheel (3, 3a), preferably via a transmission.

4. Running gear according to one of claims 1 to 3, **characterised in that** the rotary bearing (7) is designed as a rolling bearing.

5. Running gear according to one of claims 1 to 4, **characterised in that** the alignment of the wheels (3, 3a), which determines the direction of travel, takes place via the rotary bearing (7), wherein the main axis of rotation (9) of the wheels (3, 3a) is aligned substantially perpendicularly to the road surface plane and a level compensation angle (10x) is up to +/-15°, preferably +/-5°.

6. Running gear according to one of claims 1 to 5, **characterised in that** the guide ring (1) has a cylindrical bore accommodating the rotary bearing (7) and the outer geometry can have any geometrical shape, e.g. cuboid.

7. Transport device (11) having a plurality of running gears, preferably with three or four running gears and for special embodiments with more than four running gears, according to one of claims 1 to 6, **characterised in that** the common axes of rotation (10a to 10d) can be aligned relative to one another.

8. Transport device (11) according to claim 7, **characterised in that,** when travelling straight ahead in a main direction of movement (12), the directions of travel (12a to 12d) of the running gears are aligned parallel.

9. Transport device (11) according to one of claims 7 or 8, **characterised in that** the energy supply is designed electrically and at least one energy storage device for the energy supply is arranged in the transport device (11), wherein the charging process of the energy storage device takes place without contact or by means of contacts.

10. Transport device (11) according to one of claims 7 to 9, **characterised in that** the transport device (11) is equipped with devices for the automated transport, reception and delivery of transport goods, transport containers or pallets.

11. Transport device (11) according to one of claims 7 to 10, **characterised in that** it is provided with auxiliary devices as automated handling devices, such as, for example, gripping, supporting, holding and clamping devices, or as automated working devices, such as, for example, riveting, screwing, welding, painting, grinding or polishing devices, or as complex robot systems, such as, for example joint-arm robots or snake arms, or as camera systems or other devices for performing tasks in particularly hazardous or inaccessible areas, such as remotely controlled detectors, devices for salvaging or defusing potentially dangerous objects, and the movement of the transport device (11) is controlled by means of the wheels (3, 3a) in coordination with the movement of the auxiliary devices.

12. Method for operating a transport device (11), **characterised in that** in a transport device (11) according to one of the claims 7 to 11, for cornering in any main direction of movement (12) and at any travel speed, the current travel directions (12a to 12d) of the running gears are aligned to a vanishing point (13a) derived from the trajectory of the desired path of movement at a distance (13) from the center of movement of the transport device (11) by means of the axes of rotation (10a to 10d) by controlling the rotational speeds of the wheels (3, 3a) and the curve path speed of the transport device (11) is controlled by controlling the individual rotational speeds of the wheels.

13. Method according to claim 12, **characterised in that,** for rotation at the stand about the vanishing point (13a) at a rotational speed, the running gears are aligned to the vanishing point (13a) at a distance (13) from the center of rotation of the transport device (11) by means of the axes of rotation (10a to 10d) by controlling the rotational speeds of the wheels (3, 3a) and the rotational speed of the transport device (11) is controlled by means of controlling the individual rotational speeds of the wheels.

14. Method according to claim 12 or 13, **characterised in that** laser scanners are provided for navigation and for safe operation, preferably two laser scanners (14, 14a) whose rotating laser beams (15, 15b) sweep over circular surface portions (16, 16a) in an overlapping manner, thus enabling a 360° panoramic view in the plane.

## Revendications

1. Châssis pour des dispositifs de transport (11) comportant une couronne de guidage (1) et un support de roue (2) pivotant, dans la couronne de guidage (1) autour d'un axe principal de rotation (9) pratiquement vertical, ce support étant muni de roues (3, 3a) tournant autour d'un axe de rotation commun (10),
* une couronne intérieure (8) étant montée pivotante autour de l'axe principal de rotation (9) dans la couronne de guidage (1) par l'intermédiaire d'un palier de rotation (7), et
- le support de roues (2) étant monté pivotant par au moins un palier de pivotement (5) autour d'un axe de pivotement (6) pratiquement perpendiculaire à l'axe principal de rotation (9),
châssis **caractérisé en ce que**
l'axe de pivotement (6) est à la fois perpendiculaire à l'axe principal de rotation (9) et à l'axe de rotation (10) commun aux roues (3, 3a),
* le palier de pivotement (5) étant installé sur la couronne intérieure, et l'axe de pivotement (6) et l'axe de rotation (10) sont situés dans un plan commun qui, en position d'utilisation, est parallèle au plan de la voie de circulation.

2. Châssis selon la revendication 1,
**caractérisé en ce que**
les deux roues (3, 3a) sont entraînées indépendamment l'une de l'autre.

3. Châssis selon la revendication 2,
**caractérisé en ce que**
le support de roues (2) comporte deux moteurs d'entraînement (4, 4a) reliés respectivement à une roue (3, 3a) de préférence par une transmission.

4. Châssis selon l'une des revendications 1 à 3,
**caractérisé en ce que**
le palier de rotation (7) est un palier à roulement.

5. Châssis selon l'une des revendications 1 à 4,
**caractérisé en ce que**
l'orientation des roues (3, 3a) déterminant la direction de circulation se fait par le palier de rotation (7),
- l'axe principal de rotation (9) des roues (3, 3a) étant pratiquement perpendiculaire au plan de la voie de circulation et présente un angle de niveau d'équilibre (10x) allant jusqu'à +/-15° et de préférence, +/-5°.

6. Châssis selon l'une des revendications 1 à 5,
**caractérisé en ce que**
la couronne de guidage (1) comporte un perçage cylindrique recevant le palier de rotation (7) et la géométrie extérieure peut avoir n'importe quelle forme géométrique, par exemple, une forme carrée.

7. Dispositif de transport (11) comportant plusieurs châssis, de préférence trois ou quatre châssis et pour des formes de réalisation spéciales, plus de quatre châssis selon l'une des revendications 1 à 6,
**caractérisé en ce que**
les axes de rotation communs (10a-10d) peuvent être alignés l'un par rapport à l'autre.

8. Dispositif de transport (11) selon la revendication 7,
**caractérisé en ce que**
en circulation en ligne droite, dans une direction principale de déplacement (12), les directions de circulation (12a-12d) des châssis sont orientées parallèlement.

9. Dispositif de transport (11) selon l'une des revendications 7 ou 8, **caractérisé en ce que**
l'alimentation en énergie est électrique et au moins un accumulateur d'énergie est prévu pour assurer l'alimentation en énergie dans la direction de transport (11), l'opération de charge de l'accumulateur d'énergie se faisant sans contact ou par des contacts.

10. Dispositif de transport (11) selon l'une des revendications 7 à 9, **caractérisé en ce que**
le dispositif de transport (11) est équipé d'installations pour transférer, recevoir et distribuer automatiquement des produits à transporter, des conteneurs de transport ou des palettes.

11. Dispositif de transport (11) selon l'une des revendications 7 à 10, **caractérisé en ce qu'**il comprend
des installations supplémentaires comme installations de manutention automatisées comme, par exemple, des dispositifs de préhension, de support de maintien et de tension ou des appareils de travail automatisés tels que des dispositifs de rivetage, de vissage, de soudage, de vernissage, de ponçage ou de polissage ou encore de systèmes de robots complexes tels que, par exemple, un robot à bras pliant ou un robot serpent ou un système de caméras ou autres installations pour effectuer des missions dans des zones particulièrement risquées ou inaccessibles comme, par exemple, des détecteurs télécommandés, des dispositifs de recherche ou de neutralisation d'objets potentiellement dangereux et le mouvement du dispositif de transport (11) se fait avec les roues (3, 3a) commandées de façon à être coordonnées avec le mouvement des équipements accessoires.

12. Procédé de gestion d'un dispositif de transport (11),
**caractérisé en ce que**
le dispositif de transport (11) selon l'une des revendications 7 à 11 est commandé pour une circulation en virage dans n'importe quelle direction principale de déplacement (12), et une vitesse de circulation, les directions actuelles de circulation (12a-12d) des châssis sont orientées sur un point de fuite (13a) déduit de la trajectoire du trajet de déplacement souhaité à la distance (13) du centre de déplacement du dispositif de transport (11) à l'aide des axes de rotation (10a-10d) par la commande des vitesses de rotation des roues (3, 3a) et la vitesse dans la trajectoire en courbe du dispositif de transport (11) est commandée par la commande des vitesses individuelles de rotation des roues.

13. Procédé selon la revendication 12,
**caractérisé en ce que**
pour une rotation sur place autour du point de fuite (13a) avec une vitesse de rotation, on oriente les châssis sur le point de fuite (13a) à distance (13) du centre de rotation du dispositif de transport (11) par les axes de rotation (10a-10d) par la commande des vitesses de rotation des roues (3, 3a) et on commande la vitesse de rotation du dispositif de transport (11) par la commande des différentes vitesses de rotation des roues.

14. Procédé selon la revendication 12 ou 13,
**caractérisé en ce que**
pour la navigation et pour la sécurité du fonctionnement on a prévu des lasers de balayage, de préférence deux lasers de balayage (14, 14a) dont les faisceaux laser rotatifs (15, 15b) balayent des parties de surface (16, 16a) en forme de cercle qui se chevauchent et permettent ainsi une vision circulaire de 360° dans le plan.
